(19) Europäisches Patentamt / European Patent Office / Office européen des brevets

(11) **EP 4 692 155 A1**

(12) **EUROPEAN PATENT APPLICATION**

(43) Date of publication:
**11.02.2026 Bulletin 2026/07**

(21) Application number: **24192894.4**

(22) Date of filing: **05.08.2024**

(51) International Patent Classification (IPC):
**C08G 59/50** (2006.01) **C08L 63/00** (2006.01)

(52) Cooperative Patent Classification (CPC):
(C-Sets available)
**C08G 59/5006; C08L 63/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Technische Universität München, in Vertretung des Freistaats Bayern**
**80333 München (DE)**

(72) Inventors:
• **COSTA RIQUELME, Rúben Darío**
 **94377 Steinach (DE)**
• **FERRARA, Sara**
 **94315 Straubing (DE)**
• **LEI, Sihan**
 **94315 Straubing (DE)**

(74) Representative: **Engelhard, Markus**
**Boehmert & Boehmert**
**Anwaltspartnerschaft mbB**
**Pettenkoferstrasse 22**
**80336 München (DE)**

(54) **PROTEIN SOLID-STATE LUMINESCENT SOLAR CONCENTRATOR**

(57)  The invention is based on an epoxy resin-based material, comprising at least a first epoxy resin component and a second epoxy resin component forming a polymer matrix, wherein the second epoxy resin component is a hardener, and wherein at least one fluorescent protein is embedded in the polymer matrix. The invention further pertains to a luminescent solar concentrator (LSC), comprising an epoxy resin-based material according to this invention. A luminescent solar concentrator (LSC)-photovoltaic system, comprising an epoxy resin-based material or a luminescent solar concentrator (LSC) according to this invention, is also provided. The invention also relates to a method for preparing an epoxy resin-based material, a luminescent solar concentrator (LSC), or a luminescent solar concentrator (LSC)-photovoltaic system according to this invention. Finally, the invention also pertains to the use of an epoxy resin-based material or a luminescent solar concentrator (LSC) according to this invention in a photovoltaic and/or a lighting application.

(52) Cooperative Patent Classification (CPC): (Cont.)

C-Sets
**C08L 63/00, C08L 89/00**

**Description**

FIELD OF THE INVENTION

The invention is based on an epoxy resin-based material, comprising at least a first epoxy resin component and a second epoxy resin component forming a polymer matrix, wherein the second epoxy resin component is a hardener, and wherein at least one fluorescent protein is embedded in the polymer matrix. The invention further pertains to a luminescent solar concentrator (LSC), comprising an epoxy resin-based material according to this invention. A luminescent solar concentrator (LSC)-photovoltaic system, comprising an epoxy resin -based material or a luminescent solar concentrator (LSC) according to this invention, is also provided. The invention also relates to a method for preparing an epoxy resin -based material, a luminescent solar concentrator (LSC), or a luminescent solar concentrator (LSC)-photovoltaic system according to this invention. Finally, the invention also pertains to the use of an epoxy resin-based material or a luminescent solar concentrator (LSC) according to this invention in a photovoltaic and/or a lighting application.

DESCRIPTION

According to the latest report of the International Energy Agency (IEA), power generation from solar energy using photovoltaic (PV) solutions increased by 179 TWh in 2021, accounting for the 3.6% of global electricity generation, third after hydropower and wind. The impellent need to replace fossil fuels and its progressively reducing cost make solar power one of the most desired in the quest for alternative energy sources. Therefore, the introduction of zero-to-low-energy consumption buildings and the integration of solar-harvesting components into urban infrastructures are playing a huge role in contemporary architecture. However, traditional photovoltaic panels only respond optimally to direct sunlight, being not optimal as integrated architectural components. This is related to i) scattering and reflection loses, ii) sensitivity to shadowing, iii) low harvesting capability in UV light range. In addition, several types of photovoltaic cells reached a limit in efficiency, which corresponds to 26.1% for monocrystalline silicon solar cells (Si-cell). Thus, traditional PV panels suffer of efficiency limitation, as well as are not optimal as building-integrated PV (BIPV), due to sensitivity to incidence angle, shadowing, etc.

Therefore, much focus has been addressed in the last decade to an already forty-years-old technology, i.e. luminescent solar concentrators (LSCs), which is a concept that was born as a solution to the limitations of the photovoltaic efficiency. LSCs consist of a transparent wave guide polymeric which hosts emitter that are able to absorb sun-light and down-convert the light into a wavelength that is closer to a red wavelength which is closer to solar cells' responding wavelength and thus take part in the production of electricity through down-converting when coupled to a photovoltaic cell (Si, GaAs, DSSCs, etc.). Since LSCs are able to concentrate both direct and diffuse sunlight, they have been proposed already at the end of the '70s as the solution to the efficiency limitation of photovoltaic panels. In addition, LSCs allow to use small area PV cells compared to the active area facing the sun. This, together with the possible LSCs production from inexpensive materials, is where this technology shows its full potential in reducing the solar light price.

Several types of fluorophores have been used so far, both inorganic and organic, as well as bio-derived. Despite the recent production of liquid LSCs exploiting Fluorescent Proteins (FPs) solutions embedded in polymer/quartz reservoirs, a valid combination of FPs and suitable transparent solid polymer matrix is still lacking in the field. On the one hand, rare-earth ions and related metal complexes, quantum dots (QDs) and nanocrystals have been previously implemented in LSC. Despite inorganic luminophores show relevant features in terms of photoluminescence quantum yield, thermostability, and overall efficiency in LSC-PV systems, they display several issues in terms of fabrication and disposal, high cost, hazard for the environment, as well as for human health. On the other hand, several organic dyes and polymers have been explored to date.

A new frontier in LSCs production has started in 2009 with the first implementation of bio-based components in LSCs, i.e. phycobilisomes ([1] - C. L. Mulder, L. Theogarajan, M. Currie, J. K. Mapel, M. A. Baldo, M. Vaughn, P. Willard, B. D. Bruce, M. W. Moss, C. E. McLain, J. P. Morseman, Adv. Mater. 2009, 21, 3181).

Besides couple of works implementing R-phycoerythrin (R-PE)[2, 3] and chlorophyll[4],new interest has started growing towards the use of fluorescent proteins (FPs). So far, fluorescent proteins have been mainly implemented in liquid solar concentrators.

Sadeghi et al. ([6] - S. Sadeghi, R. Melikov, H. Bahmani Jalali, O. Karatum, S. B. Srivastava, D. Conkar, E. N. Firat-Karalar, S. Nizamoglu, ACS Appl. Mater. Interfaces 2019, 11, 8710) used solutions embedded in polymer for implementation of fluorescent proteins in liquid solar concentrators.

Carlos et al. ([5] - C. P. A. Carlos, S. F. H. Correia, M. Martins, O. A. Savchuk, J. A. P. Coutinho, P. S. Andre, J. B. Nieder, S. P. M. Ventura, R. A. S. Ferreira, Green Chem. 2020, 22, 4943) used solutions embedded in quartz cages for implementation of fluorescent proteins in liquid solar concentrators. Despite no stability data are reported for such liquid LSCs, it is known that up-scaled liquid photovoltaic (PV) systems are related to leakage issues and evaporation of the solvent. In addition, only a restricted number of β-barrel FPs has been explored so far in LSCs, such as eGFP for green

LSCs ($\eta$opt = 3.3 %, PCE = 0.35, liquid) and the red-emitting mScarlet (external efficiencies around 2.4 % in aqueous medium).

However, moving to solid-state protein-based LSCs would prevent the typical stability issues of up-scaled liquid photovoltaic systems, like leakage and evaporation of the solvent. There is thus an urgent need to provide valid combination of suitable fluorescent proteins and a transparent polymer matrix to enable the provision of liquid protein-based LSCs.

Here, the inventors identify the lack of i) suitable transparent solid-state FP-based systems for solar windows and ii) a well-structured investigation around different families of FPs in LSCs, especially in terms of stability over time. The inventors develop a waveguiding matrix to host FPs, specifically the green Tsapphire and the red smURFP, achieving both single- and two-protein LSC-PV systems with optical efficiency of 3.4 % and photon conversion efficiency (PCE) ~1.3%, at their best. In conclusion, with this work the inventors set one step forward in the optimization of FP-based LSCs, introducing for the first time i) a novel matrix for protein stabilization in the solid state, which has not been used so far in any photovoltaic or lighting application involving FPs, ii) the use of green- and red-emitting solid bio-based LSCs and iii) the highest $\mu_{opt}$ and PCE values reported to date for protein LSC-PV systems. Surprisingly, the liquid LSCs bearing novel $\beta$-barrel and phycobiliproteins of the present invention are excellent in stability evaluation over time both in terms of photophysics and efficiency.

BRIEF DESCRIPTION OF THE INVENTION

Generally, and by way of brief description, the main aspects of the present invention can be described as follows:

In a first aspect, the invention pertains to an epoxy resin -based material, comprising at least a first epoxy resin component and a second epoxy resin component forming a polymer matrix, wherein the second epoxy resin component is a hardener, wherein at least one fluorescent protein is embedded in the polymer matrix, wherein the epoxy resin -based material is transparent and/or solid, and wherein the epoxy resin -based material optionally further comprises a stabilizer and/or an additive and/or water.

In a second aspect, the invention pertains to a luminescent solar concentrator (LSC), comprising an epoxy resin-based material according to the first aspect of this invention.

In a third aspect, the invention pertains to a luminescent solar concentrator (LSC)-photovoltaic system, comprising an epoxy resin-based material according to the first aspect of this invention, or a luminescent solar concentrator (LSC) according to the second aspect of this invention.

In a fourth aspect, the invention pertains to a method for preparing an epoxy resin-based material according to the first aspect of this invention, a luminescent solar concentrator (LSC) according to the second aspect of this invention, or a luminescent solar concentrator (LSC)-photovoltaic system according to the third aspect of this invention.

In a fifth aspect, the invention pertains to the use of an epoxy resin-based material according to the first aspect of this invention, or a luminescent solar concentrator (LSC) according to the second aspect of this invention, in a photovoltaic and/or a lighting application.

DETAILED DESCRIPTION OF THE INVENTION

In the following, the elements of the invention will be described. These elements are listed with specific embodiments, however, it should be understood that they may be combined in any manner and in any number to create additional embodiments. The variously described examples and preferred embodiments should not be construed to limit the present invention to only the explicitly described embodiments. This description should be understood to support and encompass embodiments which combine two or more of the explicitly described embodiments or which combine the one or more of the explicitly described embodiments with any number of the disclosed and/or preferred elements. Furthermore, any permutations and combinations of all described elements in this application should be considered disclosed by the description of the present application unless the context indicates otherwise.

In a first aspect, the invention pertains to an epoxy resin-based material, comprising at least a first epoxy resin component and a second epoxy resin component forming a polymer matrix, wherein at least one fluorescent protein is embedded in the polymer matrix, wherein the epoxy resin-based material is transparent and/or solid, and wherein the epoxy resin-based material optionally further comprises a stabilizer and/or an additive and/or water.

According to the present invention, the epoxy resin-based material comprises and/or is a polymer matrix, and the terms "epoxy resin-based material" and "polymer matrix" can be used interchangeably.

In one embodiment, the at least one fluorescent protein is integrated in a solid-state material, wherein the solid-state material is a polymer matrix, wherein the polymer matrix is transparent.

In one embodiment, the at least one fluorescent protein is integrated in a cross-linked and/or a thermosetting and/or a thermoplastic polymer matrix, such as a thermoplastic and transparent polymer matrix, preferably a thermoplastic, transparent and solid polymer matrix.

In one embodiment, the epoxy resin-based material comprises at least a first epoxy resin component and a second epoxy resin component, i.e. at least two epoxy resin components and is thus a bi-component epoxy resin matrix.

In one embodiment, the at least one fluorescent protein is a solution comprising the at least one fluorescent protein, such as a solution of the at least one fluorescent protein in a buffer, wherein any buffer solvent that can prevent proteins from changes in the pH can be used.

In a preferred embodiment, the at least one fluorescent protein is a solution comprising the at least one fluorescent protein, such as a solution of the at least one fluorescent protein in a buffer, wherein the buffer is PBS, Tris-HCl, HePes, MOPs buffer, or a combination thereof.

According to the present invention, the at least one fluorescent protein can be any kind of fluorescent protein, such as any fluorescent protein that can be found in the fluorescent protein data base. In one embodiment, the at least one fluorescent protein is a green-emitting, a red-emitting, a far red-emitting, a blue-emitting, a yellow-emitting, a purple-emitting, or a pink-emitting fluorescent protein.

In one embodiment, the at least one fluorescent protein is a green- and/or a red-emitting ligand-based and/or β-barrel fluorescent protein, such as mGreenLantern (mGL), DsRed, UnaG, smURFP, Tsapphire, EGFP, staygold, mCherry, LSSmOrange, LSSmCherry, BFP, IRFP720, or dTomato (AF).

In a further embodiment, the at least one fluorescent protein is a fluorescent protein that has a similar structure to any one of mGreenLantern (mGL), DsRed, UnaG, smURFP, Tsapphire, EGFP, staygold, mCherry, LSSmOrange, LSSmCherry, BFP, IRFP720, or dTomato (AF).

In one embodiment, the at least one fluorescent protein is a green- and/or a red-emitting ligand-based fluorescent protein, such as bilirubin in UnaG, biliverdin in smURFP, or iRFP720.

In one embodiment, the at least one fluorescent protein is a green- and/or a red-emitting β-barrel fluorescent protein, such as EGFP, dTomato (AF), or DsRed.

In a further embodiment, the at least one fluorescent protein is characterized by the chromophore and/or the oligomerization degree.

In one embodiment, the stabilizer and/or additive of the epoxy resin-based material comprises trymethylpropane ethoxylate (TMPE) and optionally further comprises one or more further additive(s), such as sugar(s), glycerol, or combinations thereof, the first epoxy resin component of the epoxy resin-based material is based on bisphenol-A-co-epichlorohydrin (DGEBA), and/or the second epoxy resin component of the epoxy resin-based material is based on 3-(Aminomethyl)-3,5,5-trimethylcyclohexan-1-amine (IPDA).

According to this invention, the first epoxy resin component is or comprises a compound that comprises an epoxy ring (mostly used is DGEBA and also modified DGEBA). According to this invention, the second epoxy resin component is or comprises a compound that belongs to amines (both aliphatic/aromatic and primary/secondary), phenols, carboxylic acids, thiols, anhydrides, or combinations thereof.

In one embodiment, the first epoxy resin component is or comprises a compound that comprises an epoxy ring.

In one embodiment, the second epoxy resin component is or comprises a compound that belongs to amines (both aliphatic/aromatic and primary/secondary), phenols, carboxylic acids, thiols, anhydrides, or combinations or derivatives thereof.

The person of skill is well aware that the number of derivatives is huge for compounds comprising an epoxy ring, as well as amines (aliphatic/aromatic and primary/secondary), phenols, carboxylic acids, thiols, anhydrides, or combinations thereof. The person of skill is also well aware that the present invention should work for all the them and collectively they are known as epoxy resin.

In one embodiment, the first epoxy resin component is based on bisphenol-A-co-epichlorohydrin (DGEBA), and/or the second epoxy resin component is based on 3-(Aminomethyl)-3,5,5-trimethylcyclohexan-1-amine (IPDA).

In one embodiment, the first epoxy resin component is bisphenol-A-co-epichlorohydrin (DGEBA), and/or the second epoxy resin component is 3-(Aminomethyl)-3,5,5-trimethylcyclohexan-1-amine (IPDA).

One embodiment relates to the epoxy resin-based material according to the first aspect of this invention, wherein TMPE and/or the one or more further additive(s), such as sugar(s), glycerol, or combinations thereof, function as a polymer stabilizer, optionally wherein the polymer stabilizer prevents the degeneration of the at least one fluorescent protein. Importantly, TMPE provides a hydrophilic environment surrounding the at least one fluorescent protein and thus providing protection against pH and/or a hydrophobic environment, such as alterations in the pH and/or a hydrophobic environment induced by components of the matrix.

In one embodiment, the first epoxy resin component is DGEBA, and the second epoxy resin component is IPDA, and wherein the first epoxy resin component is polymerized by the second epoxy resin component, wherein the second epoxy resin component is a hardener.

In one embodiment, the second epoxy resin component polymerizes the first epoxy resin component, thereby obtaining a polymer matrix, wherein the at least one fluorescent protein is embedded in the polymer matrix.

In one embodiment, the second epoxy resin component acts as a thermosetting polymer, wherein the second epoxy resin component is a hardener, and polymerizes the first epoxy resin component, thereby obtaining a polymer matrix, wherein the at least one fluorescent protein is embedded in the polymer matrix. According to the present invention, the first epoxy resin component (A) is the main polymer that is cross-linked

In one embodiment, the at least one fluorescent protein is embedded *in situ* in the polymer matrix.

In one embodiment, the epoxy resin-based material comprises water and/or PBS, DGEBA, and IPDA.

In one embodiment, the ratio of water and/or PBS to DGEBA is between 1:70 and 1:35, and the ratio of water and/or PBS to IPDA is between 1:32 and 1:16, preferably around 1:70 and 1:32.

In one embodiment, the ratio of water and/or PBS, DGEBA, IPDA, and TMPE of the epoxy resin-based material according to the present invention are as shown in Table 1:

| DGEBA [g] | IPDA | TMPE [g] | TMPE: [DGEBA + IPDA] | PBS: DGEBA | PBS: IPDA | PBS [µl] |
|---|---|---|---|---|---|---|
| 3.52 | 1.58 | 0.174 | 1:30 | 1:70 | 1:32 | 50 |
| 3.52 | 1.58 | 0.174 | 1:30 | 1:35 | 1:16 | 100 |

In one embodiment, the polymer matrix provides a hydrophilic environment surrounding the at least one fluorescent protein, thereby optionally protecting the at least one fluorescent protein against alterations in the pH-value and/or a chemical curing process.

In this invention, the inventors were surprisingly able to stabilize both green and red emitting FPs in a novel transparent matrix made of a mixture of a thermosetting polymer and a stabilizer with a geometric factor (G) of 2.9. In detail, the inventors selected the highly emissive β-barrel mGreenLantern (mGL) and DsRed, as well as the ligand-based red-emitting smURFP within the phycobiliproteins family. The fluorescent materials have been subjected to both atmosphere dark conditions and simulated solar light (1 sun, 1000 W m$^{-2}$), preserving their photophysical properties (mGL: $\Phi = 70$ %, $\lambda$em = 510 nm; DsRed: $\Phi = 22$ %, $\lambda$em = 680 nm, smURFP: $\Phi = 22$ %, $\lambda$em = 680 nm) for >1500 h in dark and ~500 h upon irradiation for the longest-living one, respectively. The protein-based LSCs have been coupled to a monocrystalline Si-cell, achieving optical efficiencies (µ) of 3.25 %, 3.77 % and 3.01 % and photon conversion efficiency (PCE) of 0.64 %, 0.6 % and 0.42 % for green- and red-emitting LSCs, respectively, which are the highest reported to date for FP-based systems and represent a 20 to 40 % enhancement of the device performances compared to reference protein-free LSC-PV systems. Here, a systematic evaluation of the device lifetime in terms of optical efficiency upon constant irradiation has been performed for the mGL, DsRed and smURFP LSC-PV systems, achieving 140 h, 140 h and 220 h stabilities. In conclusion, the inventor's work constitutes a step forward in the optimization of FP-based LSCs, reporting for the first time i) a novel matrix for protein stabilization in the solid state, which has not been used so far in any photovoltaic or lighting application involving FPs, ii) the use of novel green- and red-emitting bio-based LSCs and iii) the highest µopt and PCE values reported to date for protein LSC-PV systems, providing an almost 2-fold enhancement of analogue liquid protein LSCs.

In a second aspect, the invention pertains to a luminescent solar concentrator (LSC), comprising an epoxy resin-based material according to the first aspect of this invention.

In one embodiment, the luminescent solar concentrator (LSC) according to the second aspect of this invention is solid and/or bio-based.

Importantly, the inventors' work is the first to present single-protein based LSCs implementing mGreeenLantern (mGL), DsRed and smURFP fluorescent proteins in a versatile epoxy resin matrix, showing stabilities ~20 and >1500 days for smurfp in dark and >2 years for dsred and mGL under dark ambient conditions. The inventors also report the characterization of LSC-PV systems, achieving record optical efficiency of maximum 3.7% and photon conversion efficiency (PCE) ~0.64 %. Surprisingly, the inventor's green and red-emitting fluorescent epoxy resin-based materials showed a relevant long-term stability against both simulated solar light (1 sun, 1000 W m$^{-2}$) and a prominent self-stability in dark conditions, preserving their photophysical properties (M: $\Phi = 70$ %, $\lambda_{em} = 510$ nm; D: $\Phi = 80$%, $\lambda_{em} = 680$ nm; S: $\Phi = $ ~20 %, $\lambda_{em} = 680$ nm) for >20/500/>300 h and >1500 h in the two conditions, respectively.

In a third aspect, the invention pertains to a luminescent solar concentrator (LSC)-photovoltaic system, comprising an epoxy resin-based material according to the first aspect of this invention, or a luminescent solar concentrator (LSC) according to the second aspect of this invention.

In one embodiment, the luminescent solar concentrator (LSC)-photovoltaic system according to the third aspect of this invention is used to improve the light harvesting efficiency of a photovoltaic system.

In one embodiment, the luminescent solar concentrator (LSC)-photovoltaic system according to the third aspect of this invention further comprises at least one monocrystalline or polycrystalline cell, such as at least one monocrystalline Si-cell, an amorphous Silicon solar cell (a-Si), a Cadmium telluride solar cell (CdTe), a Copper indium gallium selenide solar cell (CI(G)S), a crystalline silicon solar cell (c-Si), a heterojunction (HJT), a dye-sensitized solar cell (DSSC), a gallium arsenide germanium solar cell (GaAs), a hybrid solar cell, a micromorph (such as a tandem-cell using a-Si/µc-Si), a monocrystalline solar cell (mono-Si), a multi-junction solar cell (MJ), an organic solar cell (OPV), a perovskite solar cell, a photoelectrochemical cell (PEC), a plasmonic solar cell, a polycrystalline solar cell (multi-Si), a quantum dot solar cell, a solid-state solar cell, a thin-film solar cell (TFSC), a wafer solar cell, and/or a wafer-based solar cell crystalline.

In a fourth aspect, the invention pertains to a method for preparing an epoxy resin-based material according to the first aspect of this invention, a luminescent solar concentrator (LSC) according to the second aspect of this invention, or a luminescent solar concentrator (LSC)-photovoltaic system according to the third aspect of this invention, comprising the steps of:

(a) Mixing at least one fluorescent protein with a liquid, such as a buffer like PBS, to obtain a solution comprising the at least one fluorescent protein;

(b) Mixing the solution comprising the at least one fluorescent protein as obtained in step (a) with trymethylpropane ethoxylate (TMPE) and/or one or more further additive(s), such as sugar(s), glycerol, or combinations thereof, to obtain a mixture;

(c) Adding a first epoxy resin component to said mixture;

(d) Adding a second epoxy resin component to said mixture, wherein the second epoxy resin component is a hardener;

(e) Polymerizing said second epoxy resin component to obtain a polymeric mixture;

(f) Optionally, stirring said polymeric mixture;

(g) Optionally, pouring said polymeric mixture into a mold, and

(h) Curing said polymeric mixture, preferably at an ambient temperature, more preferably a temperature of about 20-30°C, to obtain a polymer matrix, wherein the at least one fluorescent protein is embedded in the polymer matrix.

In one embodiment, the temperature as used during any of the process steps (including the curing in step (h)), is a protein-compatible temperature.

In one embodiment, the temperature as used during any of the process steps (including the curing in step (h)), is a temperature below 6o°C, preferably below 50°C, more preferably below 45°C, even more preferably below 40°C, even more preferably below 35°C, and most preferably around or below 30°C.

In the method for preparing an epoxy resin-based material according to the fourth aspect of this invention, the components and/or mixtures and/or material used during any of the steps (a) to (g) are in a liquid state. In step (h) of the method, the components and/or mixtures and/or material, preferably the polymeric mixture, is cured to obtain a polymer matrix, wherein the at least one fluorescent protein is embedded in the polymer matrix, wherein the polymer matrix is solid.

In one embodiment, the at least one fluorescent protein is embedded *in situ* in the polymer matrix.

In one embodiment relating to the method of the fourth aspect of this invention, TMPE and/or the one or more further additive(s), such as sugar(s), glycerol, or combinations thereof, function as a polymer stabilizer, optionally wherein the polymer stabilizer prevents the degeneration of the at least one fluorescent protein.

In one embodiment relating to the method of the fourth aspect of this invention, the first epoxy resin component is bisphenol-A-co-epichlorohydrin (DGEBA) and the second epoxy resin component is 3-(Aminomethyl)-3,5,5-trimethylcyclohexan-1-amine (IPDA).

In a fifth aspect, the invention pertains to the use of an epoxy resin-based material according to the first aspect of this invention, or a luminescent solar concentrator (LSC) according to the second aspect of this invention, in a photovoltaic and/or a lighting application.

One embodiment pertains to the use of an epoxy resin-based material according to the first aspect of this invention, or a luminescent solar concentrator (LSC) according to the second aspect of this invention, to improve the light harvesting efficiency of a photovoltaic system and/or a lighting application.

The terms "of the [present] invention", "in accordance with the invention", "according to the invention" and the like, as used herein are intended to refer to all aspects and embodiments of the invention described and/or claimed herein.

As used herein, the term "comprising" is to be construed as encompassing both "including" and "consisting of", both meanings being specifically intended, and hence individually disclosed embodiments in accordance with the present invention. Where used herein, "and/or" is to be taken as specific disclosure of each of the two specified features or components with or without the other. For example, "A and/or B" is to be taken as specific disclosure of each of (i) A, (ii) B and (iii) A and B, just as if each is set out individually herein. In the context of the present invention, the terms "about" and "approximately" denote an interval of accuracy that the person skilled in the art will understand to still ensure the technical effect of the feature in question. The term typically indicates deviation from the indicated numerical value by $\pm 20\%$, $\pm 15\%$, $\pm 10\%$, and for example $\pm 5\%$. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. As will be appreciated by the person of ordinary skill, the specific such deviation for a numerical value for a given technical effect will depend on the nature of the technical effect. For example, a natural or biological technical effect may generally have a larger such deviation than one for a man-made or engineering technical effect. Where an indefinite or definite article is used when referring to a singular noun, e.g. "a", "an" or "the", this includes a plural of that noun unless something else is specifically stated.

It is to be understood that application of the teachings of the present invention to a specific problem or environment, and the inclusion of variations of the present invention or additional features thereto (such as further aspects and embodiments), will be within the capabilities of one having ordinary skill in the art in light of the teachings contained herein.

Unless context dictates otherwise, the descriptions and definitions of the features set out above are not limited to any particular aspect or embodiment of the invention and apply equally to all aspects and embodiments which are described.

All references, patents, and publications cited herein are hereby incorporated by reference in their entirety.

BRIEF DESCRIPTION OF THE FIGURES

The figures show:

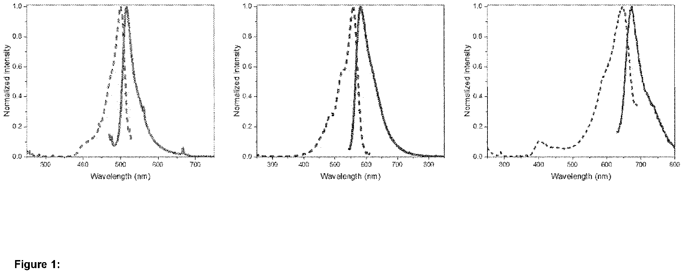

Figure 1 shows normalized excitation (dotted line) and emission (continuous line) spectra of reference stabilizer-free LSCs bearing 0.5 mg of **M** (left), **D** (middle) and **S** (right).

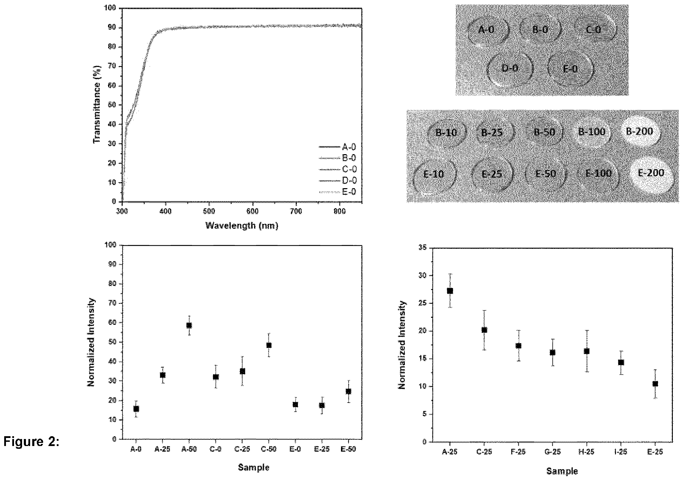

Figure 2 shows the effect of the amount of PBS and stabilizer on the lightguiding properties of the LSC. Bottom: percentage of light waveguided to the edges for LSCs listed in Table 2, prepared with 0 mg, 0.087 mg and 0.348 mg of additive upon adding 0 $\mu$L, 25 $\mu$L and 50 $\mu$L of PBS buffer. Right: percentage of light waveguided to the edges for LSCs listed in Table 2 prepared with 25 $\mu$L upon increasing amount of stabilizer.

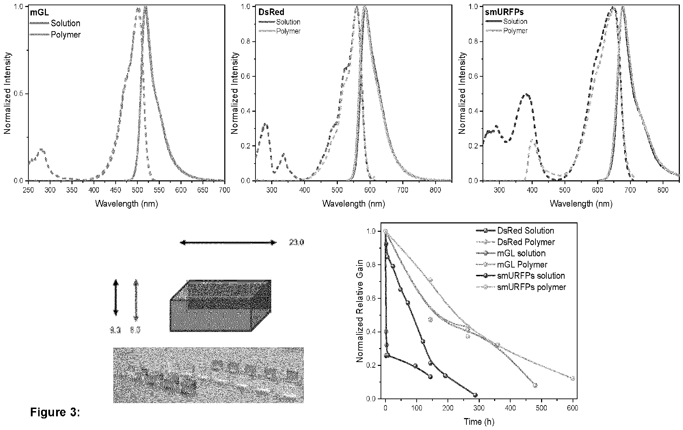

Figure 3 shows: Top: Excitation and emission features **of M** (left), **D** (center) and **S** (right) both in PBS solution (1 mg/mL) and embedded in the polymer matrix with stabilizer (0.5 mg of protein). Bottom: sketch of LSC coupled to PV-cell (left); normalized relative gain in $n_{opt}$ (%) decay profile (right) for liquid and solid LSCs embedding 0.5 mg **of S** (blue), **T** (green) and **D** (red) upon simulated 1 sun irradiation (1 sun, 1000 W m$^{-2}$).

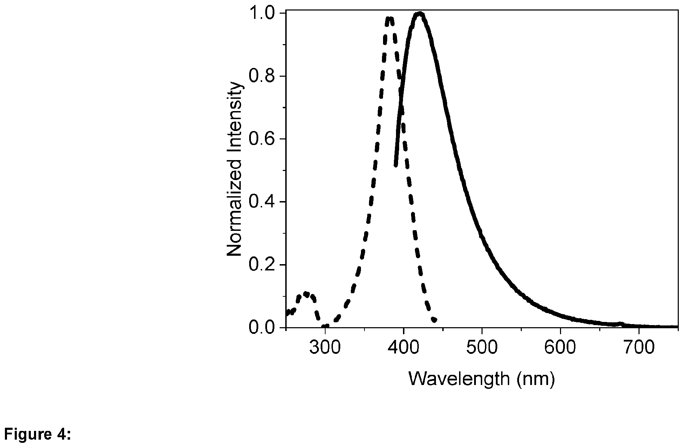

Figure 4 shows normalized excitation (dotted line, $\lambda_{em} = 480$ nm) and emission (continuous line, $\lambda_{ex} = 380$ nm) spectra of protein-free resin.

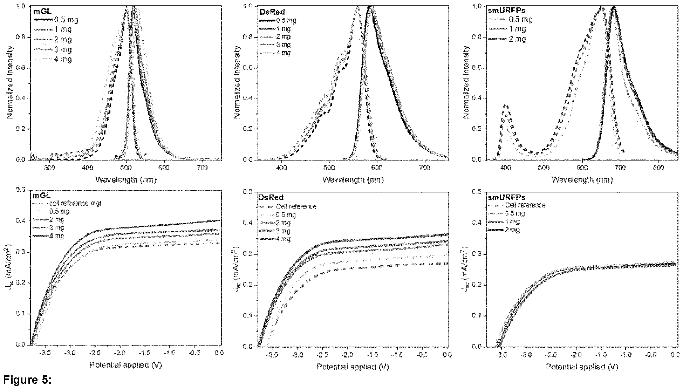

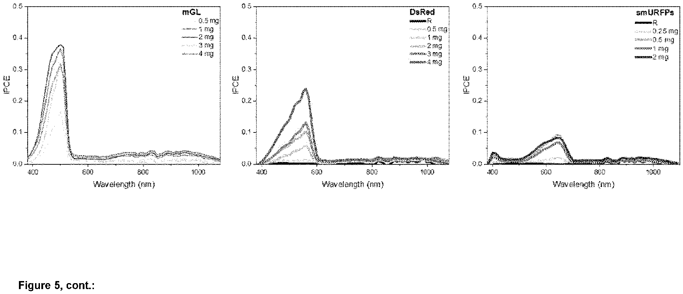

Figure 5 shows excitation and emission features (top) **of M** (left), **D** (center) and **S** (right) embedded in the polymer matrix upon increasing concentration - see legend. J-V (middle) and IPCE (bottom) curves of M- (left), D-(middle) and **S-** (right) based polymer LSCs coupled to a PV cell upon increasing FP amount in the LSC - see legend. The curves relative to the reference polymer-LSC (**R**, no protein embedded) coupled to a PV cell are also reported.

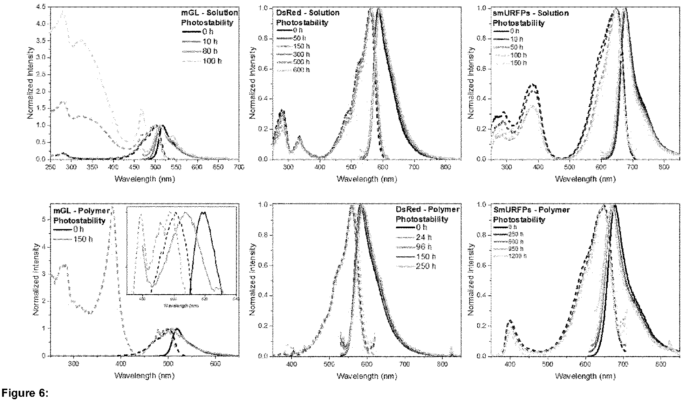

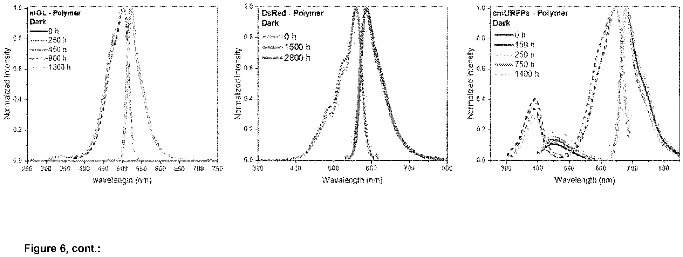

Figure 6 shows excitation and emission spectra over time of **M-, D-** and **S**-based solutions bearing 0.5 mg of protein subjected to constant simulated solar irradiation (top) - see legend. Excitation and emission spectra over time of **M-**, **D-** and **S**-LSCs bearing 0.5 mg of protein both upon simulated one sun irradiation (middle) and kept in dark at ambient conditions (bottom).

EXAMPLES

Certain aspects and embodiments of the invention will now be illustrated by way of example and with reference to the description, figures and tables set out herein. Such examples of the methods, uses and other aspects of the present invention are representative only, and should not be taken to limit the scope of the present invention to only such representative examples.

The examples show:

**Example 1: A novel polymer matrix design for LSCs**

First, the inventors prepared several protein-based materials implementing PBS solutions of mGL (M), DsRed (D) and smURFP (S) FPs to the first component of a commercial epoxy resin resin. Proteinswere expressed in Escherichia coli BL21 and purified by Ni-NTA affinity chromatography, followed by gel filtration on a HiLoad 26/600 Superdex 75pg column in phosphate buffer saline (PBS) buffer. Purified proteins were frozen immediately in liquid nitrogen and stored at -80 °C. Thawed proteins were centrifuged at 14,000 rpm for 30 min at 4 °C, and the supernatant was used for the measurements.

After addition of the second part of the resin, the mixtures were gently stirred and dried overnight in a mold to obtain samples (M-1, D-1, S-1). Unfortunately, all the proteins undergo an immediate denaturation in the form of loss emission intensity, color change and reduction of $\Phi$ after polymerization.

Thus, the inventors characterized the photophysical properties of **M, D** and **S** both in solution and in polymer coatings - without stabilizer **Table 2** and **Figure 1**. The photophysical properties of the three proteins in solution resulted to be comparable with previously reported ones. **M** shows an emission centered at $\lambda_{em}$ = 520 nm with a shoulder at $\lambda_{em}$ = 555 nm, which is associated to a main excitation band centered at 500 nm and a less intense one in the range 200-300 nm compared with proteins solution. The associated excited state lifetime ($\tau$) value results to be lower when the protein is embedded in the solid state **(M-1)** compared to solution (2.03 ns vs. 3.62 ns, respectively) and photoluminescence quantum yield ($\Phi$) undergoes partial quenching (10-15 % loss) compared to solution - **Table 2**. Similar considerations can be carried out for **D** and **S** proteins, showing a red ($\lambda_{em}$ =585 nm) and deep red ($\lambda_{em}$ = 670 nm) emissions in solution, associated to main excitation bands at 560 nm and 645 nm and $\Phi$ of 80 % and ~20 %, respectively. However, in the case of **S,** such properties are not preserved in the polymeric host **(S-1),** where the quenched emission features up to 4 % of $\Phi$ values reveal even stronger incompatibility with the matrix - **Table 2.**

**Table 2.** Photophysical features of **M, D** and **S** in solution (1 mg/mL) and in the polymer host without **(M-1, D-1, S-1)** and with **(M-2, D-2, S-2)** stabilizer.

| | FP | $\lambda_{exc}$ [nm] | Aem [nm] | $\Phi$ [%] | $\tau$ [ns] | $k_r$ a) [s⁻¹] | $k_{nr}$ b) [s⁻¹] |
|---|---|---|---|---|---|---|---|
| | **M** | 500 | 517 | 69 | 3.62 | 1.9 | 0.8 |
| **Solution** | **D** | 560 | 585 | 66 | 3.9 | 1.7 | 0.9 |
| | **S** | 645 | 670 | 18 | 1.8 | 1.0 | 4.6 |
| | **M-1** | 500 | 515 | 58 | 2.03 | 2.86 | 2.07 |
| **LSCs without Stabilizer** | **D-1** | 555 | 581 | 78 | 2.75 | 2.9 | 0.8 |
| | **S-1** | 645 | 672 | <5 | 1.51 | 0.19 | 6.42 |
| | **M-2** | 500 | 519 | 70 | 2.3 | 3.0 | 1.3 |
| **LSCs with stabilizer** | **D-2** | 560 | 585 | 79 | 2.73 | 2.9 | 0.8 |
| | **S-2** | 645 | 675 | 15 | 1.33 | 1.1 | 6.4 |

a), b) $\times 10^8$

Here, the inventors identified the urgent need of a suitable additive to stabilize the FPs in the matrix formulation. In virtue of their previous knowledge, the inventors selected trymethylpropane ethoxylate (TMPE), which is known to provide a good hydrophilic environment surrounding the protein and thus providing protection against pH and hydrophobic on not tolerated components of the matrix.

First, the inventors prepared several protein-free LSCs mixing the protein stabilizer to the polymer host, to investigate the changes on the transparency and wave guiding properties of the coatings. In a second stage, the inventors also evaluated the effect of increasing amount of PBS solution on the same features of the matrix. Therefore, 5 different matrices (A-0, B-0, C-0, D-0, E-o) were produced upon increasing the amount of a stabilizing polymer agent from 0 mg to 0.348 mg without buffer solution - **Table 2**. Transmittance essays show that, in the absence of water, no detrimental effect is ascribed to the stabilizer - **Figure 2**. The light-guiding properties of the matrix have also been investigated upon increasing both polymer stabilizer and PBS amount. The LSCs were irradiated on the main surface with $\lambda_{em}$ = 450 nm. Both the transmitted light and the out coming light from the four edges were collected with an integrated sphere coupled to a spectrometer. In **Figure 2c,** it is evident that an increase in the stabilizer amount from **A** (o mg) to **E** (0.348 mg) determines a decrease in the light-guiding properties of the material. On the contrary, the wave guiding properties increase upon implementing a higher PBS aliquot in the samples for a given amount of stabilizer (*e.g.*, sample **A-0** vs **A-50)** - **Figure 2c.** However, there is a limit in the amount of PBS which could be implemented in the matrix, which is experimentally set around 50 $\mu$L: a water amount exceeding this value would determine opacity of the matrix and a milky texture - **Figure 2b.** This is mainly ascribed to the role of water in the curing process of the resin. An excess of water inside the samples could result in aqueous micro phases inside the resin, keeping the water content in the epoxy resin phase. This could result in *i)* the acceleration of the curing process, but also in *ii)* the remaining of uncured epoxy resin as colloidal with aqueous micro phase, with consequent milky appearance of the materials. In the presence of 25 $\mu$L of PBS, the light-guiding properties look almost constant independently of the amount of additive/stabilizer - **Figure 2c,** so matrix **C-25** was chosen to produce protein-based LSCs, which would ensure the possibility of *i)* implementation of high amounts of proteins which could require higher volumes of buffer and *ii)* no alteration of the matrix wave guiding features in such cases. To further confirm the role of the stabilizer on the samples prepared with 25 $\mu$L of PBS, several additional data points have been considered - **Figure 2d.** Taking into account the average of the light wave-guided to the edges, the properties result comparable in a range between 0.087 g and 0.25 g - **Table 2,** confirming that matrix **C-25** shows the optimal behavior.

**Table 3.** List of LSCs prepared with polymer host, 25/50 $\mu$L of PBS and increasing amount of stabilizer. In a sample of the type **X-n,** where *X* is a letter and *n* a number, the letter progression indicates the increase of stabilizer amount and *n* indicates the volume of PBS in $\mu$L. In detail: samples prepared with polymer host upon increasing stabilizer amount **(A-0 to E-0)** without PBS; samples upon adding either 25 $\mu$L or 50 $\mu$L of PBS buffer to LSCs upon increasing amount of stabilizer (sample **A-25 to I-25** and samples **A-50, C-50** and **E-50,** respectively).

| Sample | Polymer Host [g] | Stabilizer [g] | Stabilizer:Polymer Host | PBS [$\mu$l] |
|---|---|---|---|---|
| **A-0** | 2.2 | 0 | - | 0 |
| **B-0** | 2.2 | 0.040 | 1:60 | 0 |
| **C-0** | 2.2 | 0.087 | 1:30 | 0 |
| **D-0** | 2.2 | 0.174 | 1:15 | 0 |
| **E-0** | 2.2 | 0.348 | 1:08 | 0 |
| **A-25** | 2.2 | 0 | 1:60 | 25 |
| **A-50** | 2.2 | 0 | 1:60 | 50 |
| **C-25** | 2.2 | 0.087 | 1:30 | 25 |
| **C-50** | 2.2 | 0.087 | 1:30 | 50 |
| **E-25** | 2.2 | 0.348 | 1:08 | 25 |
| **E-50** | 2.2 | 0.348 | 1:08 | 50 |
| **F-25** | 2.2 | 0.130 | 1:18 | 25 |
| **G-25** | 2.2 | 0.170 | 1:14 | 25 |
| **H-25** | 2.2 | 0.200 | 1:12 | 25 |
| **I-25** | 2.2 | 0.250 | 1:10 | 25 |

**Example 2: FP-based polymer LSCs: preparation and characterization**

The LSCs were prepared implementing an aliquot of a PBS solution to a stabilizer. The polymer was added on top and the resulting mixture was gently stirred and poured into a mold. Several coatings were produced upon increasing the amount of stabilizer and the transmittance properties were studied with a Shimadzu UV-VIS spectrophotometer Uv-2700i. The photophysical characterization (excitation and emission spectra, $\phi$, $\tau$) was carried out with a FS5 Spectrofluorometer from Edinburgh Instruments, using SC-5 module for liquid samples, SC-10 module for solid samples, and SC-30 Integrating Sphere to determine $\phi$. All measurements were performed at RT in ambient.

The effect of the increasing amount of PBS solution on the waveguiding properties was studied for samples prepared with three different amounts of stabilizer. The same properties were also investigated upon increasing the amount of stabilizer on samples prepared with the optimized amount of PBS solution. The LSCs were irradiated on the main surface with a WINGER® WEPRB1-S1 Power LED Star royal blue (450nm). Both the transmitted light and the outcoming light from the four edges were collected with an AvaSphere 30-Irrad Integrated sphere coupled to an Avantes Spectrometer 2048L (300 VA grating, 200 $\mu$m slit, CCD detector). The light was collected on three adjacent spots per edge/surface (5 mm measurement port for AvaSphere 30-Irrad Integrated sphere). The reported waveguiding efficiency is calculated based on the average of the light collected in the 12 spots measured on the 4 edges. The employed power source was a Keithley 2231-A-30-3.

FP-based polymeric LSCs were prepared implementing alternatively an aliquot of PBS mGL **(M),** DsRed **(D)** and smURFP **(S)** solutions to matrix **C-25. M-** and **D**-based ones were produced with 0.25 to 4 mg of protein, while **S**-based LSCs were prepared with an amount of protein ranging between 0.5 mg and 2 mg. The upper limit has been dictated by experimental restrictions in the handability of the protein at very high concentrations. The oligomer character **of S** protein rules the ease of preparation of **S**-LSCs, setting the highest amount of implementable protein at lower values compared to **M** and **D**.

When implemented in the polymer LSC, **M** shows an emission centered at $\lambda_{em}$ = 520 nm with a shoulder at $\lambda_{em}$ = 555 nm, which is consistent with the emission profile of the protein in a PBS solution - **Figure 3**. The corresponding excitation band is centered at $\lambda_{ex}$ = 500 nm. As notable, the inventors do not report any excitation peak centered at 280 nm in the polymer matrix, usually expected for the aromatic residues of FPs. This must be due to the intrinsic high absorbance of the matrix at $\lambda_{abs}$<300nm - **Figure 4,** which does not allow a direct excitation of the tryptophan residues, being the polymer:protein ratio strongly unbalanced towards the first. These features are corroborated by a photoluminescence quantum yield $\Phi$ ~70% both in solution and solid state, despite a reduction in the excited state lifetime ($\tau$) from 3.6 ns to 2.3 ns - **Table 3,** which might indicate *i)* a distortion of the chromophore once embedded in the resin or an *ii)* aggregation tendency of the protein once in contact with the polymeric host. Unfortunately, the absence of the excitation peak around 280 nm hampers a deeper understanding of the energy transfer processes occurring at the tryptophan/chromophore level, resulting in a lack of information on the conformation and degree of compression of the chromophore. The emission spectrum undergoes a gradual red shift up to ~20 nm upon increasing the protein amount in the material. This goes hand in hand with a further decrease of the $I_{400}/I_{497}$ ratio in the excitation spectrum, as well as a red shift of the 400 nm peak up to ~15 nm. However, no reduction in $\Phi$ is noticed, as well as $\tau$ stays constant ~ 2.35 ns up to the 3 mg sample. - **Figure 5 / Table 5.**

**Table 4.** Excited state lifetime (**τ**) and photoluminescence quantum yield (**ф**) for **M-**, **D-** and **S**-based polymer LSCs. Mono-exponential and bi-exponential functions are used for the fit of the excited state decay, as well as the average lifetime with relative contributions is reported – see also Experimental Section.

| Polymer | FP [mg] | $\tau_{mono}$ [ns] | A | $\tau_1$ [ns] | A1 | $\tau_2$ [ns] | A2 | $\tau_{avg}$ [ns] | $\Phi$ |
|---|---|---|---|---|---|---|---|---|---|
|  | 0.5 | 2.3 | - | 2.32 | 2628 | 6.22 | 18 | 2.39 | 0.694 |
|  | 1 | - | - | 1.67 | 1953 | 2.73 | 1334 | 2.23 | 0.698 |
|  | 2 | - | - | 1.81 | 1761 | 2.77 | 1226 | 2.31 | 0.7 |
|  | 3 | - | - | 1.99 | 2314 | 3.11 | 874 | 2.41 | 0.691 |
| **M** | 4 | 3.76 | - | - | - | - | - | - | 0.696 |
|  | 0.5 | 3.9 | - | - | - | - | - | - | 0.66 |
|  | 1 | 3 | 3017.4701 | 1.97 | 385.38581 | 3.16 | 2420.9471 | 3.05 | 0.78 |
|  | 2 | 2.89 | 2855.8916 | 1.5 | 256.37879 | 3.04 | 2380.0804 | 2.96 | 0.79 |
| **D** | 3 | 2.92 | 3133.1254 | 2.64 | 2033.7363 | 3.46 | 1081.6311 | 2.98 | 0.79 |
|  | 4 | 3.05 | 3101.0383 | 2.99 | 2649.8948 | 4.82 | 98.40549 | 3.09 | 0.74 |
|  | 0.5 | 1.39 | - | - | - | - | - | - | 0.17 |
|  | 1 | 1.34 | - | - | - | - | - | - | 0.13 |
| **S** | 2 | 1.32 | - | - | - | - | - | - | 0.10 |

**D** has been implemented in LSCs showing an emission centered at $\lambda_{em}$ = 585 nm, which is consistent with the emission profile of the protein in a PBS solution - **Figure 3**. The corresponding excitation band is centered at $\lambda_{ex}$ = 500 nm. Similarly to **M** protein, the chromophore faces a strong decrease of the $\tau$ value from 3.9 ns to 2.7 ns when transposed from liquid to solid state - **Tables 4-6,** which is associated to 65 % and ~80% $\Phi$ values, respectively. The high $\Phi$ in the polymer matrix is preserved even upon increasing the protein load inside the polymer samples up to 4 mg, despite the drastic decrease in the average $\tau$ value and a slight broadening of the photoluminescence spectra suggest a high degree of packing already in the presence of 1 mg of protein - **Figure 5** and **Table 5**.

Finally, **S**-LSCs-show main $\lambda_{em}$ = 675 nm, only 5 nm shifted compared to the emission in solution ($\lambda_{em}$ = 670 nm) with 0.5 mg of protein- **Figure 3.** A red shift of the emission peak occurs upon increasing **S** amount inside the coating, up to 10 nm for the 2 mg coating - **Figure 5** and **Table** 5. This occurs together with a slight broadening of the main emission peak. The excitation spectrum does not differ to the one of the protein solution in terms of peaks centered at $\lambda_{em}$ = 390 and 640 nm. In addition, the main excitation peak centered at $\lambda_{em}$ = 640 nm undergoes a specular broadening of its shape and the more pronounced shoulder at $\lambda$ = 590 nm. These changes in the fluorescence spectra are ascribed to different vibronic profile when the protein is surrounded by a higher number of FP molecules, corroborated by a decrease in the photoluminescence quantum yield from ~20% to ~10% and almost stable $\tau$ values - **Table 5.** Moreover, the samples hosting high amount **of S** present aggregates of protein which are visible by eye as multiple colorful dots inside the polymer.

**Example 3: FP-based polymer LSCs-PV system: device characterization and stability**

**M-** and **D**-based polymer LSCs bearing an amount of protein ranging from 0.5 mg to 4 mg, as well as the **S**-based polymer LSCs bearing from 0.5 to 2 mg of FP have been characterized once coupled to the Si-cell upon simulated solar light (1 sun, 1000 W m$^{-2}$). Here, a system **(R-PV)** composed by the Si-cell coupled with a protein-free LSC **(R)** produced with the thermosetting material and the stabilizer has been considered as reference - see **Figure 5** and **Table 3**. However, the values of $J_{sc}$ current for the uncoupled PV cell are also reported in **SI.** With further reference purposes, liquid LSCs have been combined with the PV cell, by simply coupling the solar cell to one side of a quartz cuvette containing the FP (0.5 mg) solutions, as already known in literature - **Table 3** and **Figure 6.**

**M-** and **D-** based LSCs results in a clear 20% to 40% increase in the optical efficiency compared to the reference system **R** built with a protein-free transparent epoxy resin-based material upon increasing the amount of protein up to 4 mg - **Figure 5/Table 2,** with the 4 mg LSCs being the best performing ones. Thus, all the LSCs successfully and surprisingly overpassed the efficiency limit of the reference system, and the achievements of the LSCs of the present invention drastically enhance those related to reference liquid LSC, which turned to be 3 h, 300 h and 100 h stable upon analogue irradiation conditions. A higher amount of protein is not implementable in the coatings due to the preparation limitations discussed herein elsewhere. In contrast, **S**-based LSCs lead to a 4 % improvement compared to **R - Figure 5/Table 2.** Here, the accentuated aggregation behavior of **S,** especially in the presence of high amount of FP as already discussed herein elsewhere, results in predominant scattering and re-absorption events leading to a loss of light which is effectively wave guided to the edges of the material. Importantly, all the solid LSCs allowed to achieve a minimum 1.7-fold enhancement compared to their liquid counterparts for **M**-based materials up to a 2.2-fold improvement for **D**-based ones in terms of optical efficiencies. These results refer to a one-PV cell architecture, and therefore a higher gain will be expected when coupling the LSC to at least two PV cells.

Overall, **D**-based solid LSC achieve the best $\mu$ values, ranging from 3.0 % to 3.8 %, while **M-** and **S**-based systems reached 3.2 % and 3.0 % optical efficiencies at their best. Noteworthy, the inventor's approach allows the inventors to reach photon conversion efficiency (PCE) values of 0.32 %, 0.29 % and 0.21 % for the best performing **M-, S-** and **D-** systems with only one photovoltaic cell, which is intuitively translated to PCE values ranging from 0.4 to 0.6% considering to couple 2 PV panels to the concentrator.

Table 2. Figures of merit for **M-, D-** and **S**-based liquid and polymer LSCs coupled to PV cell. The relative gain (%) has to be intended compared to the relative **R-PV** system (figures of merit for **R-PV** in SI). $L_{50}$ has to be intended as the time to reach the half of the initial relative gain in $\mu_{opt}$ compared to the protein-free reference system, as an indication of the lifetime of the LSC upon continuous irradiation at sunlight.

| | FP [mg] | $J_{sc}$ [mA/cm$^2$] | FF [%] | $\eta_{opt}$ [%] | PCE | Relative Gain [%] | $L_{50}$ [h] |
|---|---|---|---|---|---|---|---|
| **M** | 0.5 | 0.219 | 0.59 | 1.7 | 0.17 | 59 | 3 |
| **D** | 0.5 | 0.213 | 0.61 | 1.7 | 0.17 | 54 | 88 |
| **S** | 0.5 | 0.208 | 0.63 | 1.66 | 0.18 | 23 | 2 |
| **M** | 0.5 | 0.342 | 62.6 | 2.75 | 0.27 | 18 | 140 |
| | 1 | 0.345 | 62.1 | 2.77 | 0.27 | 19 | - |
| | 2 | 0.358 | 62.7 | 2.87 | 0.28 | 23 | - |
| | 3 | 0.371 | 62.6 | 2.97 | 0.30 | 28 | - |
| | 4 | 0.406 | 62.1 | 3.25 | 0.32 | 39 | - |
| | 0.5 | 0.295 | 62.8 | 3.09 | 0.22 | 9 | 145 |
| | 1 | 0.334 | 62.8 | 3.50 | 0.27 | 24 | - |

(continued)

| | FP [mg] | $J_{sc}$ [mA/cm$^2$] | FF [%] | $\eta_{opt}$ [%] | PCE | Relative Gain [%] | $L_{50}$ [h] |
|---|---|---|---|---|---|---|---|
| **D** | 2 | 0.329 | 62.7 | 3.44 | 0.26 | 22 | - |
| | 3 | 0.340 | 62.2 | 3.56 | 0.27 | 26 | - |
| | 4 | 0.360 | 62.6 | 3.77 | 0.29 | 33 | - |
| | 0.5 | 0.277 | 60.3 | 2.89 | 0.2 | 4.2 | 220 |
| **S** | 2 | 0.288 | 61.67 | 3.01 | 0.21 | 6.8 | - |

Amount of fluorescent protein in the sample - FP [mg]; Short circuit current density - $J_{sc}$ [mA/cm$^2$]; optical efficiency - $\eta_{opt}$ [%]; Photon conversion efficiency - PCE [%]; Relative gain of the FP-LSC-PV system with reference to the R-PV system [%]; LSC lifetime, *i.e.* the time the FP-LSC-PV employs to achieve the 50% of the initial relative gain with reference to the R-PV system - $L_{50}$ [h].

As shown in **Table 3**, the protein-based LSCs coupled to a monocrystalline Si-cell can achieve optical efficiencies ($\mu$) of 3.25 %, 3.77 % and 3.01 % and photon conversion efficiency (PCE) of 0.64 %, 0.6 % and 0.42 % for green- and red-emitting LSCs, respectively. For this experiment, LSCs were coupled with one monocrystalline solar cell IXOLAR™ SolarBITs (KXOB2-02X8F). J-V curves have been recorded placing the solar cell in contact with each one of the edges of the LSC The J-V characteristics were recorded using linear sweep voltammetry with PGSTAT30 potentiostat (Ecochemie). The LSC was irradiated either with simulated light solar simulated light (1 sun, 1000 W m$^{-2}$) calibrated with a KG5-filtered Silicon reference cell (Newport/Oriel, Model 91150V) using solar simulator Sol3A 94023A (Class AAA, 450 W Xenon Lamp, AM 1.5G) from Newport or with 0.2 sun illumination simulated with a WINGER® WEPCW3-S1 Power LED Star cold white (14000K). In the latter case, the employed power source was a Keithley 2231-A-30-3. The IPCE scans of LSCs coupled to the solar cell were recorded from 300 to 1100 nm.

The data reported in **Table 3** were calculated to as follows [46,47]:

$$G = \frac{A_s}{A_e} = 2.9$$

G is the geometry factor, $A_s$ and $A_e$ are the surface area exposed to radiation and the total area of the edged of the LSC;

$$\eta_{opt} = \frac{I_{sc}^L A_e}{I_{sc} A_s} = \frac{I_{sc}^L}{I_{sc} G}$$

where $\eta_{opt}$ is the optical efficiency, $I_{sc}^L$ represents the short circuit current when the PV is coupled to the LSC and $I_{sc}$ is the corresponding value for the Si-cell directly exposed to the simulated solar light;

$$PCE = \frac{P_{out}^{el}}{P_{in}} = \frac{I_{sc}^L V_0^L FF}{A_s \int_{\lambda_1}^{\lambda_2} I_{AM1.5G} \, d\lambda}$$

where $\eta_{opt}$ is the optical efficiency, $V_0^L$ represents the short circuit current when the PV is coupled to the LSC.

In order to evaluate applicability of these polymer-based materials as concentrators in the context of solar windows, two main types of stability tests have been performed on **M-, D-** and **S**-based LSCs (0.5 mg of FP each). For the LSC self-stability tests, the LSCs were either irradiated using WINGER® WEPW3-S1 Power LED Star white (6500K) as pumping source or stored in dark conditions. The employed power source was a Keithley 2231-A-30-3. The photophysical characterization (excitation and emission spectra, $\Phi$, $\tau$) was carried out over time with a FS5 Spectrofluorometer from Edinburgh Instruments using SC-10 module.

The samples were *i)* kept upon indoor dark conditions to estimate the self-stability of the coatings with the support of time resolved fluorescence analysis and *ii)* subjected to simulated continuous daylight stress in concert with the evaluation of both the photophysical properties and optical efficiency over time of the LSC-PV cell system. In the latter case, liquid solar concentrators bearing 0.5 mg of **M-, D-** and **S-,** have been built as previously discussed and considered as a matter of comparison. Both for liquid and solid concentrators, the inventors report the $L_{50}$ value, *i.e.* the time to reach the half of the initial relative gain in $\mu_{opt}$ compared to the protein-free reference system, as an indication of the lifetime of the LSC - **Table 3**. The time resolved fluorescence analysis revealed a long-term compatibility of the three proteins within the polymer matrix when the LSCs are kept upon dark conditions in ambient, seen no significant deviations in the excitation and emission spectra profiles over time for the first 1500 h (3 months) - **Figure 6.**

In contrast, **M**-based LSCs suffer a slow and continuous quenching of the emission features upon continuous simulated daylight stress (simulated light = 1 sun, 1000 W m$^{-2}$), with a 50 % decrease in the $\Phi$ value already after 20 h - **Table 6.** Such emission quenching, accompanied by a reduction of the average $\tau$ value from 2.3 ns to ~1 ns and thus due to the evolution of the chromophore to its non-ionic non emissive form, leads to the half of the initial relative gain value in optical efficiency of the LSC-PV system after the first 140 h - **Table 6.** Such achievement results in a ~50-fold enhancement of the performance of the liquid LSC-PV system upon continuous irradiation - **Table 7.** Here, together with a faster photophysical degradation (50% of the $\Phi$ value is lost after 3 h and gradual reduction of $\tau$ value from 3.6 to 2 ns), the inventors report a 50% of relative gain loss after only 3 h.

**Table 6.** Over time excited state lifetime **($\tau$)** and photoluminescence quantum yield ($\Phi$) for **M-, D-** and **S**-based polymer LSCs keeping the system upon constant irradiation conditions. Mono-exponential and bi-exponential functions are used for the fit of the excited state decay, as well as the average lifetime with relative contributions is reported - see also Experimental Section.

| Polymer | Time h | $\tau_{mono}$ [ns] | $\tau_1$ [ns] | A1 | $\tau_2$ [ns] | A2 | $\tau_{avg}$ [ns] | $\Phi$ |
|---|---|---|---|---|---|---|---|---|
| **M** | 0 | 2.3 | - | - | - | - | - | 0.71 |
| | 25 | 1.63 | 1.15 | 1929 | 2.61 | 946 | 1.92 | 0.25 |
| | 100 | - | 0.6 | 4307 | 2.93 | 223 | 1.07 | 0.10 |
| | 150 | - | 1 | 1455 | 2.64 | 1200 | 2.12 | 0.10 |
| **D** | 0 | 2.73 | - | - | - | - | - | 0.79 |
| | 24 | 2.44 | - | - | - | - | - | 0.71 |
| | 96 | 2.4 | - | - | - | - | - | 0.68 |
| | 150 | 2.4 | - | - | - | - | - | 0.62 |
| | 250 | 1.81 | 1.18 | 2142 | 2.95 | 1064 | 2.16 | 0.52 |
| | 480 | - | - | - | - | - | - | 0.43 |
| | 600 | - | - | - | - | - | - | 0.36 |
| **S** | 0 | 1.33 | - | - | - | - | - | 0.15 |
| | 150 | 1.66 | - | - | - | - | - | 0.16 |
| | 250 | - | 0.66 | 1677 | 2.23 | 1624 | 1.86 | 0.17 |
| | 600 | - | 0.87 | 2190 | 2.46 | 1349 | 1.88 | 0.18 |
| | 950 | - | 0.51 | 1958 | 2.68 | 881 | 2.04 | 0.16 |
| | 1200 | - | 0.42 | 2583 | 3.01 | 910 | 2.28 | 0.15 |

Liquid **D**-concentrators coupled to PV systems result in devices with $L_{50}$ of ~90 h in terms of relative gain, despite it takes around 300 h to half the $\Phi$ value upon continuous irradiation. Seen a 150 h stable $\tau$ value ~3.5 ns and 50 h stable $\Phi$ value ~65 % - **Table 7** the inventors suggest *i)* an initial photobleaching of a huge portion of proteins with no alteration of the chromophore structure resulting in a drastic decrease of the $J_{sc}$ and optical efficiency values, and *ii)* a consequent distortion of the chromophore structure with further quenching of the emission properties and, thus, of the device performances. A similar behavior is observed in the solid **D**-LSCs, where a decrease in the $\tau$ values is observed only after 250 h, accompanied by stable $\Phi$ for 50 h, achieving a 50% decrease in $\Phi$ only after 500 h - **Table 6.** Therefore, the second-stage of the degradation mechanism, dominated by a decrease in the both $\tau$ and $\Phi$ values results slowed down once the protein is embedded in polymer matrix, achieving an overall device lifetime $L_{50}$ ~150 h, intended as before.

**Table 7**. Over time excited state lifetime (τ) and photoluminescence quantum yield (Φ) for **M-, D-** and **S**-based liquid LSCs keeping the system upon constant irradiation conditions. Mono-exponential and bi-exponential functions are used for the fit of the excited state decay, as well as the average lifetime with relative contributions is reported - see also Experimental Section.

| Solution | Time h | $T_{mono}$ [ns] | $\tau_1$ [ns] | A1 | $\tau_2$ [ns] | A2 | $\tau_{avg}$ [ns] | Φ |
|---|---|---|---|---|---|---|---|---|
| M | 0 | 3.62 | 1.5 | 121 | 3.72 | 2630 | 3.68 | 0.69 |
| | 2 | - | 0.94 | 2040 | 3.48 | 624 | 2.29 | 0.18 |
| | 6 | - | 0.84 | 3053 | 3.15 | 2783 | 3.00 | 0.15 |
| | 10 | - | 0.84 | 2165 | 2.98 | 827 | 2.07 | 0.14 |
| | 80 | - | 0.75 | 2237 | 2.75 | 1423 | 2.15 | 0.01 |
| | 100 | - | 0.68 | 1562 | 2.78 | 1397 | 2.33 | 0.01 |
| D | 0 | 3.9 | - | - | - | - | - | 0.66 |
| | 50 | - | 1.27 | 177 | 3.49 | 2409 | 3.43 | 0.65 |
| | 150 | - | 1.76 | 1263 | 3.54 | 1873 | 3.09 | 0.47 |
| | 300 | - | 0.91 | 1540 | 3.24 | 1575 | 2.74 | 0.33 |
| | 500 | - | 0.81 | 1631 | 3.14 | 1257 | 2.56 | 0.09 |
| | 600 | - | 0.71 | 2386 | 2.96 | 1037 | 2.16 | 0.05 |
| S | 0 | 1.77 | 1.55 | 2304 | 2.82 | 495 | 1.91 | 0.18 |
| | 2 | 1.5 | 1.32 | 2520 | 2.76 | 392 | 1.67 | 0.14 |
| | 4 | - | 1.36 | 2500 | 3.53 | 169 | 1.68 | 0.12 |
| | 8 | 1.43 | 1.23 | 2451 | 2.72 | 408 | 1.63 | 0.12 |
| | 48 | 1.27 | 1.11 | 2678 | 2.89 | 316 | 1.53 | 0.11 |
| | 96 | 1.266 | 1.01 | 2245 | 2.55 | 502 | 1.57 | 0.10 |
| | 144 | 1.214 | 0.72 | 2447 | 2.28 | 975 | 1.59 | 0.05 |
| | 168 | 1.15 | 0.68 | 2423 | 2.365 | 886 | 1.62 | 0.00 |

In short, all the polymer LSCs demonstrated to be suitable for a reasonably long-term application upon outdoors conditions. As proofed by the photophysical essays over time upon dark storage conditions in ambient, with no significant change in the excitation and emission spectra profiles for more >60 days, the performance upon solar irradiation would be further prolonged in realistic day-night sun light cycles compared to continuous simulated solar illumination.

REFERENCES

The references are:

[1] C. L. Mulder, L. Theogarajan, M. Currie, J. K. Mapel, M. A. Baldo, M. Vaughn, P. Willard, B. D. Bruce, M. W. Moss, C. E. McLain, J. P. Morseman, Adv. Mater. 2009, 21, 3181.

[2] M. Fisher, C. Ippen, D. Farrell, R. Walters, M. Gonzalez, K. Trautz, J. Tischler, J. Morseman, A. Buchtemann, A. Chatten, In 2012 38th IEEE Photovoltaic Specialists Conference, 2012, pp. 3333-003338.

[3] A. R. Frias, S. F. H. Correia, M. Martins, S. P. M. Ventura, E. Pecoraro, S. J. L. Ribeiro, P. S. Andre, R. A. S. Ferreira, J. A. P. Coutinho, L. D. Carlos, Adv. Sustain. Syst. 2019, 3.

[4] A. R. Frias, E. Pecoraro, S. F. H. Correia, L. M. G. Minas, A. R. Bastos, S. Garcia-Revilla, R. Balda, S. J. L. Ribeiro, P. S. Andre, L. D. Carlos, R. A. S. Ferreira, J. Mater. Chem. A 2018, 6, 8712.

[5] C. P. A. Carlos, S. F. H. Correia, M. Martins, O. A. Savchuk, J. A. P. Coutinho, P. S. Andre, J. B. Nieder, S. P. M. Ventura, R. A. S. Ferreira, Green Chem. 2020, 22, 4943.

[6] S. Sadeghi, R. Melikov, H. Bahmani Jalali, O. Karatum, S. B. Srivastava, D. Conkar, E. N. Firat-Karalar, S. Nizamoglu, ACS Appl. Mater. Interfaces 2019, 11, 8710.

[7] M. A. Hernandez-Rodriguez, S. F. H. Correia, R. a. S. Ferreira, L. D. Carlos, J. Appl. Phys. 2022, 131, 140901.

[8] C. Yang, H. A. Atwater, M. A. Baldo, D. Baran, C. J. Barile, M. C. Barr, M. Bates, M. G. Bawendi, M. R. Bergren, B. Borhan, C. J. Brabec, S. Brovelli, V. Bulović, P. Ceroni, M. G. Debije, J.-M. Delgado-Sanchez, W.-J. Dong, P. M. Duxbury, R. C. Evans, S. R. Forrest, D. R. Gamelin, N. C. Giebink, X. Gong, G. Griffini, F. Guo, C. K. Herrera, A. W. Y. Ho-Baillie, R. J. Holmes, S.-K. Hong, T. Kirchartz, B. G. Levine, H. Li, Y. Li, D. Liu, M. A. Loi, C. K. Luscombe, N. S. Makarov, F. Mateen, R. Mazzaro, H. McDaniel, M. D. McGehee, F. Meinardi, A. Menendez-Velazquez, J. Min, D. B. Mitzi, M. Moemeni, J. H. Moon, A. Nattestad, M. K. Nazeeruddin, A. F. Nogueira, U. W. Paetzold, D. L. Patrick, A. Pucci, B. P. Rand, E. Reichmanis, B. S. Richards, J. Roncali, F. Rosei, T. W. Schmidt, F. So, C.-C. Tu, A. Vahdani, W. G. J. H. M. van Sark, R. Verduzco, A. Vomiero, W. W. H. Wong, K. Wu, H.-L. Yip, X. Zhang, H. Zhao, R. R. Lunt, Joule 2022, 6, 8.

**Claims**

1. Epoxy resin-based material, comprising at least a first epoxy resin component and a second epoxy resin component forming a polymer matrix, wherein the second epoxy resin component is a hardener, wherein at least one fluorescent protein is embedded in the polymer matrix, wherein the epoxy resin-based material is transparent and/or solid, and wherein the epoxy resin-based material optionally further comprises a stabilizer and/or an additive and/or water.

2. The epoxy resin-based material according to claim 1, wherein the at least one fluorescent protein is a solution comprising the at least one fluorescent protein, such as a solution of the at least one fluorescent protein in a buffer, such as PBS, Tris-HCl, HePes, MOPs buffer, or combinations thereof.

3. The epoxy resin-based material according to claim 1 or 2, wherein the at least one fluorescent protein is a green- and/or a red-emitting ligand-based and/or β-barrel fluorescent protein, such as mGreenLantern (mGL), DsRed, UnaG, smURFP, Tsapphire, EGFP, staygold, mCherry, LSSmOrange, LSSmCherry, BFP, IRFP720, or dTomato (AF).

4. The epoxy resin-based material according to any one of claims 1 to 3, wherein the stabilizer and/or additive comprises trymethylpropane ethoxylate (TMPE) and optionally further comprises one or more further additive(s), such as sugar(s), glycerol, or combinations thereof, and wherein the first epoxy resin component is based on bisphenol-A-co-epichlorohydrin (DGEBA), and/or the second epoxy resin component is based on 3-(Aminomethyl)-3,5,5-trimethylcyclohexan-1-amine (IPDA).

5. The epoxy resin-based material according to claim 4, wherein TMPE and/or the one or more further additive(s), such as sugar(s), glycerol, or combinations thereof, function as a polymer stabilizer, optionally wherein the polymer stabilizer prevents the degeneration of the at least one fluorescent protein.

6. The epoxy resin-based material according to any one of claims 1 to 5, wherein the first epoxy resin component is DGEBA, and the second epoxy resin component is IPDA, and wherein the first epoxy resin component is polymerized by the second epoxy resin component.

7. The epoxy resin-based material according to any one of claims 1 to 6, wherein the epoxy resin-based material comprises water and/or PBS, DGEBA, and IPDA.

8. The epoxy resin-based material according to claim 7, wherein the ratio of water and/or PBS to DGEBA is between 1:70 and 1:35, and the ratio of water and/or PBS to IPDA is between 1:32 and 1:16, preferably around 1:70 and 1:32.

9. The epoxy resin-based material according to any one of claims 1 to 8, wherein the polymer matrix provides a hydrophilic environment surrounding the at least one fluorescent protein, thereby optionally protecting the at least one fluorescent protein against alterations in the pH-value and/or a chemical curing process.

10. Luminescent solar concentrator (LSC), comprising an epoxy resin-based material according to any one of claims 1 to 9.

11. The luminescent solar concentrator (LSC) according to claim 10, wherein the luminescent solar concentrator (LSC) is solid and/or bio-based.

12. Luminescent solar concentrator (LSC)-photovoltaic system, comprising an epoxy resin-based material according to any one of claims 1 to 9, or a luminescent solar concentrator (LSC) according to claim 10 or 11.

13. The luminescent solar concentrator (LSC)-photovoltaic system according to claim 12, further comprising at least one monocrystalline or polycrystalline cell, such as at least one monocrystalline Si-cell, an amorphous Silicon solar cell (a-Si), a Cadmium telluride solar cell (CdTe), a Copper indium gallium selenide solar cell (CI(G)S), a crystalline silicon solar cell (c-Si), a heterojunction (HJT), a dye-sensitized solar cell (DSSC), a gallium arsenide germanium solar cell (GaAs), a hybrid solar cell, a micromorph (such as a tandem-cell using a-Si/µc-Si), a monocrystalline solar cell (mono-Si), a multi-junction solar cell (MJ), an organic solar cell (OPV), a perovskite solar cell, a photoelectrochemical cell (PEC), a plasmonic solar cell, a polycrystalline solar cell (multi-Si), a quantum dot solar cell, a solid-state solar cell, a thin-film solar cell (TFSC), a wafer solar cell, and/or a wafer-based solar cell crystalline.

14. Method for preparing an epoxy resin-based material according to any one of claims 1 to 9, a luminescent solar concentrator (LSC) according to claim 10 or 11, or a luminescent solar concentrator (LSC)-photovoltaic system according to claim 12 or 13, comprising the steps of:

   (a) Mixing at least one fluorescent protein with a liquid, such as a buffer like PBS, to obtain a solution comprising the at least one fluorescent protein;
   (b) Mixing the solution comprising the at least one fluorescent protein as obtained in step (a) with trymethylpropane ethoxylate (TMPE) and/or one or more further additive(s), such as sugars, glycerol, or combinations thereof, to obtain a mixture;
   (c) Adding a first epoxy resin component to said mixture;
   (d) Adding a second epoxy resin component to said mixture, wherein the second epoxy resin component is a hardener;
   (e) Polymerizing said second epoxy resin component to obtain a polymeric mixture;
   (f) Optionally, stirring said polymeric mixture;
   (g) Optionally, pouring said polymeric mixture into a mold, and
   (h) Curing said polymeric mixture, preferably at an ambient temperature, more preferably a temperature of about 20-30°C, to obtain a polymer matrix, wherein the at least one fluorescent protein is embedded in the polymer matrix.

15. The method according to claim 14, wherein TMPE and/or the one or more further additive(s), such as sugar(s), glycerol, or combinations thereof, function as a polymer stabilizer, optionally wherein the polymer stabilizer prevents the degeneration of the at least one fluorescent protein.

16. The method according to claim 14 or 15, wherein the first epoxy resin component is bisphenol-A-co-epichlorohydrin (DGEBA) and the second epoxy resin component is 3-(Aminomethyl)-3,5,5-trimethylcyclohexan-1-amine (IPDA).

17. Use of an epoxy resin-based material according to any one of claims 1 to 9, or a luminescent solar concentrator (LSC) according to claim 10 or 11, in a photovoltaic and/or a lighting application.

**Figure 1:**

**Figure 2:**

**Figure 3:**

**Figure 4:**

Figure 5:

**Figure 5, cont.:**

**Figure 6:**

Figure 6, cont.:

Europäisches Patentamt

European Patent Office

Office européen des brevets

# EUROPEAN SEARCH REPORT

**Application Number**

EP 24 19 2894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/002904 A1 (UNIV MANCHESTER [GB]) 2 January 2020 (2020-01-02) * example B28 and B29 * | 1-3 | INV. C08G59/50 C08L63/00 |
| X | US 2013/079467 A1 (BRUNS NICO [DE] ET AL) 28 March 2013 (2013-03-28) * paragraph [0051]; figure 6 * | 1,3 | |
| A,D | CARLOS CARLOTA P. ET AL: "Environmentally friendly luminescent solar concentrators based on an optically efficient and stable green fluorescent protein", GREEN CHEMISTRY, vol. 22, no. 15, 1 January 2020 (2020-01-01), pages 4943-4951, XP093239134, GB ISSN: 1463-9262, DOI: 10.1039/D0GC01742F * the whole document * | 1-17 | |

**TECHNICAL FIELDS SEARCHED (IPC)**

C08G
C08L

The present search report has been drawn up for all claims

| Place of search | Date of completion of the search | Examiner |
|---|---|---|
| The Hague | 14 January 2025 | Hoffmann, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2894

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | Publication date | Patent family member(s) | Publication date |
|---|---|---|---|
| WO 2020002904 A1 | 02-01-2020 | NONE | |
| US 2013079467 A1 | 28-03-2013 | EP 2576681 A1 | 10-04-2013 |
| | | GB 2480842 A | 07-12-2011 |
| | | US 2013079467 A1 | 28-03-2013 |
| | | WO 2011151763 A1 | 08-12-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. L. MULDER ; L. THEOGARAJAN ; M. CURRIE ; J. K. MAPEL ; M. A. BALDO ; M. VAUGHN ; P. WILLARD ; B. D. BRUCE ; M. W. MOSS ; C. E. MCLAIN**. *Adv. Mater.*, 2009, vol. 21, 3181
- **S. SADEGHI ; R. MELIKOV ; H. BAHMANI JALALI ; O. KARATUM ; S. B. SRIVASTAVA ; D. CONKAR ; E. N. FIRAT-KARALAR ; S. NIZAMOGLU**. *ACS Appl. Mater. Interfaces*, 2019, vol. 11, 8710
- **C. P. A. CARLOS ; S. F. H. CORREIA ; M. MARTINS ; O. A. SAVCHUK ; J. A. P. COUTINHO ; P. S. ANDRE ; J. B. NIEDER ; S. P. M. VENTURA ; R. A. S. FERREIRA**. *Green Chem.*, 2020, vol. 22, 4943
- **M. FISHER ; C. IPPEN ; D. FARRELL ; R. WALTERS ; M. GONZALEZ ; K. TRAUTZ ; J. TISCHLER ; J. MORSEMAN ; A. BUCHTEMANN ; A. CHATTEN**. *2012 38th IEEE Photovoltaic Specialists Conference*, 2012, 3333-003338
- **A. R. FRIAS ; S. F. H. CORREIA ; M. MARTINS ; S. P. M. VENTURA ; E. PECORARO ; S. J. L. RIBEIRO ; P. S. ANDRE ; R. A. S. FERREIRA ; J. A. P. COUTINHO ; L. D. CARLOS**. *Adv. Sustain. Syst.*, 2019, vol. 3
- **A. R. FRIAS ; E. PECORARO ; S. F. H. CORREIA ; L. M. G. MINAS ; A. R. BASTOS ; S. GARCIA-REVILLA ; R. BALDA ; S. J. L. RIBEIRO ; P. S. ANDRE ; L. D. CARLOS**. *J. Mater. Chem. A*, 2018, vol. 6, 8712
- **M. A. HERNANDEZ-RODRIGUEZ ; S. F. H. COR-REIA ; R. A. S. FERREIRA ; L. D. CARLOS**. *J. Appl. Phys.*, 2022, vol. 131, 140901
- **C. YANG ; H. A. ATWATER ; M. A. BALDO ; D. BARAN ; C. J. BARILE ; M. C. BARR ; M. BATES ; M. G. BAWENDI ; M. R. BERGREN ; B. BORHAN**. *Joule*, 2022, vol. 6, 8